# EUROPEAN PATENT APPLICATION

(11) **EP 4 563 027 A1**
(43) Date of publication of application: **04.06.2025**
(21) Application number: 24157399.7
(22) Date of filing: 13.02.2024
(51) Int. Cl.: A24F 40/90

(54) **A CONTROL ARRANGEMENT FOR AN AEROSOL PROVISION DEVICE**

(30) Priority: 30.11.2023 CN 202311631233
(71) Applicant: Nicoventures Trading Limited, London WC2R 3LA (GB)
(72) Inventor: ZHANG, Lianhua, Shenzhen (CN); WANG, Tianyi, Shenzhen (CN); THOMAS, Michael, London, WC2R 3LA (GB)
(74) Representative: Dehns

(57) **Abstract**

A control arrangement 114 for use with an aerosol provision device 102 comprising an energy storage device 106. The control arrangement 114 is configured to determine a property of the energy storage device 106; and change a parameter of a charging cycle of the energy storage device 106 based on the determined property.

## Description

### Technical field

The present invention is in the field of control arrangements for use with aerosol provision devices, to aerosol provision devices comprising such control arrangements and aerosol provision systems. The present invention is also in the field of methods for operating aerosol provision devices.

### Background

Smoking articles such as cigarettes, cigars and the like burn tobacco during use to create tobacco smoke. Attempts have been made to provide alternatives to these articles by creating products that release compounds without combusting. Examples of such products are so-called "heat not burn" products or tobacco heating devices or products, which release compounds by heating, but not burning, material. The material may be, for example, tobacco or other non-tobacco products, which may or may not contain nicotine.

### Summary

In an aspect, there is provided a control arrangement for use with an aerosol provision device comprising an energy storage device. The control arrangement is configured to determine a property of the energy storage device, and change a parameter of a charging cycle of the energy storage device based on the determined property.

The charging cycle may be a subsequent charging cycle (i.e. a charging cycle which occurs following the determination of the property of the energy storage device). In some examples, a subsequent charging cycle may be the whole or part of a full charging cycle that begun after the determination of the property. In other examples, the determination of the property and the changing of the parameter may occur in the same charging cycle where the changing of the parameters is performed in response to the determination of the property. In these examples, the subsequent charging cycle may be the latter portion of that same charging cycle where the changed parameter is used.

The energy storage device may comprise one or more batteries.

The change in the parameter may be in comparison with the parameter used in a previous/last charging cycle of the energy storage device. The change may be in comparison with a last/previous portion of the same charging cycle.

The property of the energy storage device may change in dependence on use of the energy storage device and/or in dependence on the age of the energy storage device and/or in dependence of the environment in which the energy storage device is arranged. The property may not be a property of the energy storage device when new.

The property may comprise the number of times that the energy storage device has been discharged. This may be calculated/determined for the life time of the energy storage device. The property may comprise the number of inhalation sessions which the energy storage device has provided power for. This may be calculated/determined for the life time of the energy storage device. An inhalation session (i.e. a session of use) may correspond to the power storage device being capable of providing power for consumption by the aerosol provision device for a period of a 200 - 350 seconds, e.g. 220-330 seconds, e.g. 240-310 seconds, e.g. 260-290 seconds. This time period may begin at the point of an initial inhalation at the start of a session or from the start of the supply of power from the power storage device for the generation of an aerosol during said session. An inhalation session may comprise a plurality of inhalations from the aerosol provision device (e.g. at least 2 and a maximum of 10 inhalations). An inhalation session may comprise the provision of power from the energy storage for at least 2 inhalations and a maximum of 10 inhalations, e.g. at least 3 inhalations and a maximum of 8 inhalations, e.g. at least 4 inhalations and a maximum of 6 inhalations.

The property may comprise one or more of: a present storage capacity of the energy storage device, a state of health of the energy storage device, a time taken to perform a full charging cycle, and an expansion of an external dimension of the energy storage device. The expansion may be relative to an unexpanded state of the energy storage device, e.g. the external dimension of the energy storage device when brand new or a previous external dimension. The state of health may be a ratio of present storage capacity and maximum storage capacity of the energy storage device (i.e. the storage capacity when the energy storage device was brand new or yet to be charged or discharged).

The property may comprise a total energy storage device operating time. The total energy storage device operating time may be the total time elapsed since power was first provided by the energy storage device. This may, for example, be defined by the point at which the aerosol provision device exits a shipping mode.

The parameter may comprise a rate of charging of the energy storage device, and/or a maximum amount of energy that can be stored within the energy storage device. The rate of charging may be considered to be an average rate of charging during an entirety of a single full charging cycle.

The control arrangement may be configured to change the parameter by limiting a charging current applied to the energy storage device during the charging cycle. The charging current may be the maximum charging current or the average charging current. This may result in a reduction in the rate of charging. The control arrangement may be configured to change the parameter by limiting the (e.g. maximum) charging voltage applied to the energy storage device during the charging cycle. This may result in a reduction the maximum amount of energy storage that can be stored within the energy storage device.

The control arrangement may be configured to change the parameter of the charging cycle when the property of the energy storage device reaches a predetermined threshold level. The predetermined threshold level may be at least one of: a number of sessions, an amount of expansion, a storage capacity, and a state of health. The control arrangement may be further configured to further change the parameter of the charging cycle when the property of the energy storage device reaches at least one further predetermined threshold level. The at least one further predetermined threshold level may comprise a plurality of further predetermined threshold levels, and wherein the control arrangement is configured to further change the parameter of the charging cycle, at each one of the plurality of further predetermined threshold levels.

In yet another aspect, there is provided an aerosol provision device. The aerosol provision device comprises an energy storage device and a control arrangement as described above.

The aerosol provision device may further comprise a sensor configured to determine the property of the energy storage device.

The sensor may be a force sensor, or a pressure, or a capacitance sensor, or a timer, or a counter.

The aerosol provision device may further comprise a display configured to display information indicative of an end of life of the energy storage device or information indicative of the changed parameter. The energy storage device may be a battery or a capacitor. The determination of the property may be done by a sensor of the aerosol provision device. The display may comprise an LCD or LED display. The information may be in the form of text or a symbol. The display may be configured to indicate the number of sessions remaining before charging is required.

In yet another aspect, there is provided an aerosol provision system. The aerosol provision system comprises an article comprising an aerosol generating medium and an aerosol provision device as described above.

In yet another aspect, there is provided a method for operating an aerosol provision device. The method may comprise determining a property of an energy storage device of the aerosol provision device and changing a parameter of a charging cycle based on the determined property of the energy storage device.

The method may further comprise comparing the determined property with a predetermined threshold level.

The method may further comprise displaying information indicative of an end of life of the energy storage device or information indicative of the changed parameter. The information indicative of the changed parameter may comprise a number of sessions per a single full charge of the energy storage device.

The property may comprise one or more of: a present storage capacity of the energy storage device, a state of health of the energy storage device, a time taken to perform a full charging cycle, and an expansion of an external dimension of the energy storage device.

The parameter is changed by limiting a charging current or a maximum charging voltage applied to the energy storage device during the charging cycle. The charging current may be the maximum charging current.

Any of the features of the various embodiments of the control arrangement, e.g. in relation to the property, the parameter, the way in which they are determined or changed as set out above with respect to the control arrangement may similarly be implemented by any of the above methods.

### Brief Description of Drawings

Various embodiments will now be described, by way of example only, with reference to the accompanying schematic drawings, in which:
Figure 1 shows a schematic illustration (not to scale) of an aerosol provision system in accordance with an embodiment of the present invention;
Figure 2 shows a graph of number of sessions per full charge plotted against cumulative number of sessions; and
Figure 3 shows a flowchart of a method for operating aerosol provision device in accordance with an embodiment of the present invention.

### Details Description

As used herein, the term "aerosol-generating material" is a material that is capable of generating aerosol, for example when heated, irradiated or energized in any other way. Aerosol-generating material may, for example, be in the form of a solid, liquid or gel which may or may not contain an active substance and/or flavourants. Aerosol-generating material may include any plant based material, such as tobacco-containing material and may, for example, include one or more of tobacco, tobacco derivatives, expanded tobacco, reconstituted tobacco or tobacco substitutes. Aerosol-generating material also may include other, non-tobacco, products, which, depending on the product, may or may not contain nicotine. Aerosol-generating material may for example be in the form of a solid, a liquid, a gel, a wax or the like. Aerosol-generating material may for example also be a combination or a blend of materials. Aerosol-generating material may also be known as "smokable material".

The aerosol-generating material may comprise a binder and an aerosol former. Optionally, an active and/or filler may also be present. Optionally, a solvent, such as water, is also present and one or more other components of the aerosol-generating material may or may not be soluble in the solvent. In some embodiments, the aerosol-generating material is substantially free from botanical material. In some embodiments, the aerosol-generating material is substantially tobacco free.

The aerosol-generating material may comprise or be an "amorphous solid". The amorphous solid may be a "monolithic solid". In some embodiments, the amorphous solid may be a dried gel. The amorphous solid is a solid material that may retain some fluid, such as liquid, within it. In some embodiments, the aerosol-generating material may, for example, comprise from about 50wt%, 60wt% or 70wt% of amorphous solid, to about 90wt%, 95wt% or 100wt% of amorphous solid.

The aerosol-generating material may comprise an aerosol-generating film. The aerosol-generating film may comprise or be a sheet, which may optionally be shredded to form a shredded sheet. The aerosol-generating sheet or shredded sheet may be substantially tobacco free.

According to the present disclosure, a "non-combustible" aerosol provision system (sometimes referred to as "an aerosol provision system") is one where a constituent aerosol-generating material of the aerosol provision system (or component thereof) is not combusted or burned in order to facilitate delivery of at least one substance to a user.

In some embodiments, the delivery system is a non-combustible aerosol provision system, such as a powered non-combustible aerosol provision system.

In some embodiments, the non-combustible aerosol provision system is an electronic cigarette, also known as a vaping device or electronic nicotine delivery system (END), although it is noted that the presence of nicotine in the aerosol-generating material is not a requirement.

In some embodiments, the non-combustible aerosol provision system is an aerosol-generating material heating system, also known as a heat-not-burn system. An example of such a system is a tobacco heating system.

In some embodiments, the non-combustible aerosol provision system is a hybrid system to generate aerosol using a combination of aerosol-generating materials, one or a plurality of which may be heated. Each of the aerosol-generating materials may be, for example, in the form of a solid, liquid or gel and may or may not contain nicotine. In some embodiments, the hybrid system comprises a liquid or gel aerosol-generating material and a solid aerosol-generating material. The solid aerosol-generating material may comprise, for example, tobacco or a non-tobacco product.

Typically, the non-combustible aerosol provision system may comprise a non-combustible aerosol provision device and a consumable (sometimes referred to as an "article") for use with the non-combustible aerosol provision device.

In some embodiments, the disclosure relates to consumables comprising aerosol-generating material and configured to be used with non-combustible aerosol provision devices. These consumables are sometimes referred to as articles throughout the disclosure.

In some embodiments, the non-combustible aerosol provision system, such as a non-combustible aerosol provision device thereof, may comprise a power source (e.g. an energy storage device) and a controller. The power source may, for example, be an electric power source or an exothermic power source. In some embodiments, the exothermic power source comprises a carbon substrate which may be energised so as to distribute power in the form of heat to an aerosol-generating material or to a heat transfer material in proximity to the exothermic power source.

In some embodiments, the non-combustible aerosol provision system may comprise an area for receiving the consumable, an aerosol generator, an aerosol generation area, a housing, a mouthpiece, a filter and/or an aerosol-modifying agent.

In some embodiments, the consumable for use with the non-combustible aerosol provision device may comprise aerosol-generating material, an aerosol-generating material storage area, an aerosol-generating material transfer component, an aerosol generator, an aerosol generation area, a housing, a wrapper, a filter, a mouthpiece, and/or an aerosol-modifying agent.

An aerosol generating device can receive an article comprising aerosol generating material for heating. An "article" in this context is a component that includes or contains in use the aerosol generating material, which is heated to volatilise the aerosol generating material, and optionally other components in use. A user may insert the article into the aerosol generating device before it is heated to produce an aerosol, which the user subsequently inhales. The article may be, for example, of a predetermined or specific size that is configured to be placed within a heating chamber of the device which is sized to receive the article.

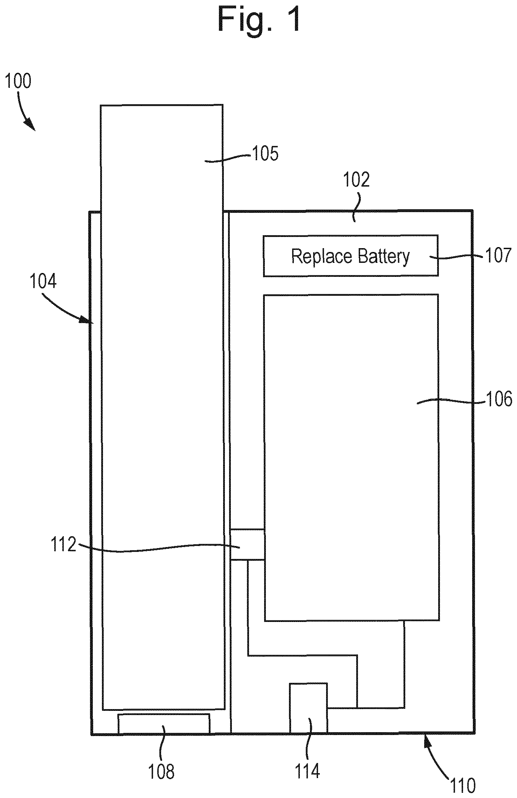

Figure 1 shows schematic illustration of an aerosol provision system 100 (which may be a non-combustible aerosol provision system 100) comprising an aerosol provision device 102 which comprises an article receiving portion 104 (e.g. in the form of a cavity within the device 102) for receiving, in use, an aerosol generating article 105. The aerosol generating article 105 may be provided separate to the aerosol provision device 102 and may be removable from the article receiving portion 104. The aerosol provision device 102 may further comprise an energy storage device 106, a heating arrangement 108, and a control arrangement 110. The heating arrangement 108 may be arranged to heat the aerosol generating article 105. The heating arrangement 108 may comprise any suitable means for heating the aerosol generating article 105. For example, the heating arrangement 108 may comprise a heating element configured to heat the aerosol generating article 105. The heating element may comprise a resistive or inductive heating element. In other embodiments, the heating arrangement may be integrally provided with the aerosol generating article 105. In some embodiments, the article receiving portion 104 and/or the heating arrangement 108 may be omitted.

The aerosol generating article 105 may comprise an aerosol generating material/medium. The aerosol generating material may generate aerosol upon an application of heat. The energy storage device 106 may comprise one or more batteries or one or more capacitors or any other component(s) that can store electrical energy. The heating arrangement 108 may heat the aerosol generating article 105 received within the article receiving portion 104. The heating of the aerosol generating article 105 may cause the generation of aerosol therefrom which may be inhaled by a user.

In some embodiments, as depicted, the control arrangement 110 may be provided as a part of the aerosol provision device 102. However, in other embodiments, the control arrangement 110 may be provided as an individual entity separate from the aerosol provision device 102. As such, while the components and/or features of the control arrangement 110 are described herein in relation to an aerosol provision device, nevertheless, the following apply similarly to an individual separate control arrangement. For example, the control arrangement described herein may be applied to a retrofitting kit that is configured to adapt an existing aerosol provision device to have at least some of the components and/or features of the aerosol provision device 102.

In some embodiments, the control arrangement 110 may comprise a processor 114. The processor 114 may be configured to perform one or more of the functions of the control arrangement 110 discussed herein. In other embodiments, the control arrangement 110 does not comprise a processor and instead comprises any other suitable means for performing the one or more functions of the control arrangement 110 discussed herein.

In some embodiments, the aerosol provision system 100 may be connected to, or further comprise, an energy source configured to provide energy to the energy storage device 106 for storage during a charging cycle. For example, the energy source may be a docking station or a mains power interface.

The control arrangement 110 is configured to determine a property of the energy storage device 106. The property may be indicative of the health, i.e. a health-related property, of the energy storage device 106. As an example, energy storage devices typically experience swelling (i.e. physical expansion) from repeated use and/or with age (i.e. as the energy storage device 106 gets older). Excessive swelling may cause leakages or breakdowns (e.g. chemical or electrical) of the energy storage device 106. As such, the risk of injury, e.g. from short circuits or the leaking of chemical materials from the energy storage device 106, may increase with swelling.

The control arrangement 110 is further configured to change a parameter of a charging cycle of the energy storage device 106 based on the property. The change in the parameter may be in comparison with the parameter used in a previous/last charging cycle of the energy storage device 106. The charging cycle for which the parameter is changed may be performed following the determination of the property of the energy storage device 106, e.g. a subsequent charging cycle. In some embodiments, the property may be determined during a charging cycle of the energy storage device 106, and the parameter which is changed may be of the charging cycle during which the property is determined. In other embodiments, the property may be determined prior to the beginning of a charging cycle, and the subsequent charging cycle may then have its parameter adapted. In some embodiments, the property may be determined at the end of a charging cycle, e.g. immediately or shortly after a charging cycle, and the subsequent charging cycle may then have its parameter changed. In some embodiments, the property may be determined completely independent of a charging cycle, e.g. when the aerosol provision device 102 is not being used, and the subsequent, i.e. the parameter of the next i.e. the subsequent, charging cycle may be changed. The parameter may be considered to be a charging parameter which defines the amount and/or the rate of energy transfer to the energy storage device 106.

The control arrangement 110 may be configured to change the parameter of the charging cycle in any suitable manner. For example, it may restrict the supply of electrical power to the energy storage device 106 when the aerosol provision device 102 is connected to an external power source, e.g. a mains power supply. This connection may be via a wired or wireless power connection.

The Applicant has found that the determination of a property (e.g. a property indicative of the health) of the energy storage device 106 and the changing of a parameter of a charging cycle (e.g. a charging cycle which follows the determination of the property, e.g. a subsequent charging cycle) may advantageously be used to accommodate/mitigate the swelling of the energy storage device 106, thereby potentially reducing the risk of damage to the aerosol provision device 102 and/or risk of injury to a user.

The property of the energy storage device 106 may be any suitable property which may impact the need to adapt charging of the energy storage device 106. As such, the property may be a property which changes in dependence on use of the energy storage device 106 and/or in dependence on the age of the energy storage device 106 and/or in dependence of the environment in which the energy storage device 106 is arranged. The environment in which the energy storage device 106 is arranged, specifically the environment in which the aerosol provision device 102 is arranged, may impact its swelling, for example. As an example, a hotter environment may cause increased swelling of the energy storage device 106. The use, e.g. charging and/or discharging may impact the energy storage device 106, e.g. the amount it swells. This is explained in more detail below. Similarly, the age of the energy storage device 106 may also have an impact, e.g. on the amount of swelling of the energy storage device 106, e.g. as a result of a chemical change within the energy storage device 106. The property of the energy storage device 106 determined by the control arrangement 110 may thus not be a property of the energy storage device 106 when new (e.g. when it has not yet been used/not yet been charged and/or discharged) and rather may be a property which changes over time/use. The property may thus be a property which is determined after at least one, e.g. a plurality of, discharges (e.g. full discharges) of the energy storage device 106, or a property determined after at least one, e.g. a plurality of, charging cycles of the energy storage device 106, or after at least one session of use for which the energy storage device 106 has provided power for, or at least a predetermined period of time following insertion of the energy storage device 106 into the aerosol provision device 102.

In some embodiments, the property, determined by the control arrangement 110, may comprise the number of times that the energy storage device 106 has been discharged. A discharge of the energy storage device 106 may be considered to be release of energy stored therein sufficient to allow for the generation of aerosol from the aerosol generating article. For example, this may involve energising the heating arrangement 108 with enough energy to cause the heating element to reach a temperature to cause the aerosolization of the aerosol generating material in the aerosol generating article 105. The number of times that the energy storage device 106 has been discharged may be calculated/determined for the life time of the energy storage device 106. In other words, the count for the number of discharges begins from when the energy storage device 106 is new or yet to be discharged even once.

In some embodiments, the property, determined by the control arrangement 110, may comprise the number of sessions of use which the energy storage device 110 has provided power for. A session of use (i.e. an inhalation session) may correspond to the power storage device 106 being capable of providing power for consumption by the aerosol provision device for a period of a 200 - 350 seconds, e.g. 220-330 seconds, e.g. 240-310 seconds, e.g. 260-290 seconds. This time period may begin at the point of an initial inhalation at the start of a session or from the start of the supply of power from the power storage device for the generation of an aerosol during said session. The energy storage device 106 may not, necessarily provided power during the entire session of use. A session of use may comprise a plurality of inhalations from the aerosol provision device 102 (e.g. 2 or more inhalations, or 3 or more inhalations, or 4 or more inhalations, or 5 or more inhalations, or 6 or more inhalations, or 7 or more inhalations, or 8 or more inhalations, or 9 or more inhalations, or 10 or more inhalation, or a maximum of 10 inhalations). Similarly, the number of inhalation sessions may be calculated/determined for the life time of the energy storage device 106. In other words, the count for the number of inhalation sessions begins from when the energy storage device 106 is new or yet to be discharged even once. The control arrangement 110 may comprise a suitable counter and/or timer configured to determine the number of sessions.

In some embodiments, the property, determined by the control arrangement 110 may comprise a present storage capacity of the energy storage device 106. The present storage capacity of the energy storage device 106 may be the maximum energy the energy storage device 106 is able to presently store (at the time of the determination). As will be appreciated, this may reduce over time and/or as the number of uses/discharges of the energy storage device 106 increases. In some embodiments, the property may comprise a state of health of the energy storage device 106. The state of health may be a ratio of present storage capacity and maximum storage capacity (i.e. it's rated storage capacity) of the energy storage device 106, which may be the storage capacity of the energy storage device 106 when the energy storage device 106 was new or yet to be discharged even once.

In some embodiments, the property may comprise the time taken to perform a charging (e.g. full charging) cycle. A full charging cycle may be considered increasing the energy stored within the energy storage device 106 from at least partially (e.g. completely) empty to at least partially (e.g. full) maximum (present) capacity (i.e. the maximum energy the energy storage device 106 is capable of storing at the time of charging). For example, a full charging cycle may be considered to be increasing the energy stored within the energy storage device 106, e.g. the increase in the amount of energy stored within the energy storage device 106 may be 100%, or 90%, 80%, 70%, 60%, 50% (of the present charge capacity of the energy storage device 106). Moreover, a full charging cycle may start from 0%, or 10%, or 20%, or 30%, or 40% and may terminate at ≥50%, e.g. 100%, or 90%, or 80%, or 70%, or 60%. As will be appreciated, a full charging cycle may utilise a combination of any of the aforementioned examples. A charging cycle may begin when the energy storage device 106 is connected to a power supply capable of providing power for charging and end when the power supply is electrically disconnected from the energy storage device 106. The control arrangement 110 may comprise a suitable timer configured to determine the time taken to perform a (e.g. full) charging cycle. In some embodiments, the property may be the rate of charging in a charging cycle.

In some embodiments, the property comprises an expansion of an external dimension of the energy storage device 106. The expansion may be determined/calculated relative to an unexpanded state of the energy storage device, e.g. the external dimension of the energy storage device when brand new or a previous external dimension.

In some embodiments, the property may comprise the number of times the energy storage device 106 has been charged. In other words, the property may be the number of charging cycles (e.g. partial or full charging cycles) experienced by energy storage device 106.

In some embodiments, the property may comprise a total energy storage device operating time. The total energy storage device operating time may be the time since power was first provided by the energy storage device 106 to another component in the aerosol provision device 102. This may, for example, be defined by the point at which the aerosol provision device 102 exits a shipping mode and first draws electrical power from the energy storage device 106. In other embodiments, the total energy storage device operating time may begin when the energy storage device 106 is first inserted into the aerosol provision device 102. The total energy storage device operating time may encompass the total time in which the energy storage device 106 has supplied power, the time in which it has been receiving power (i.e. charging) and the time in which it is not supplying/receiving power.

In some embodiments, the control arrangement 110 may comprise a sensor 112. The determining of the property may comprising measuring the property of the energy storage device 106 by the sensor 112. However, in other embodiments, the sensor 112 may be omitted entirely.

The sensor 112 may be configured to detect expansion/swelling of the energy storage device 106. The sensor 112 may be configured to measure a force exerted by the energy storage device as a result of expansion, e.g. pressure and/or force applied to the sensor 112. For example, the pressure and/or force sensor may be configured to measure the force between the energy storage device 106 and the compartment in which the energy storage device 106 resides or positioned within. This is force/pressure may be indicative of the amount of the expansion/swelling exhibited by the energy storage device 106.

Additionally or alternatively, in some embodiments, the control arrangement 110 comprises a capacity sensor configured to measure the present storage capacity of the energy storage device 106. The present storage capacity may be the maximum amount of energy that can be stored within the energy storage device 106 at the point at which the measurement is made. As will be appreciated, the maximum amount of energy that can be stored within the energy storage device 106 may decrease with age and/or repeated use. As such, the present storage capacity may be a smaller value than an initial/rated value when the energy storage device 106 was new or yet to charged and/or discharged even once. For example, the capacity sensor may be a capacitance sensor configured to measure the capacitance of the energy storage device 106. The capacity sensor may be a voltage or current sensor configured to measure the voltage or current output by the energy storage device 106. The capacity sensor may be considered to be, or be part of, the sensor 112.

Additionally or alternatively, the control arrangement 110 may be further configured count a number of times which the energy storage device 106 has discharged power and/or a number of sessions of use for which the energy storage device 106 has provided power for. In other words, the control arrangement 110 may comprise a counter configured count a number of times which the energy storage device 106 has discharged power and/or a number of sessions of use for which the energy storage device 106 has provided power for. The counter may be considered to be or be part of the sensor 112. The control arrangement 110 may comprise a timer which may be used in the determination of the number of sessions of use.

Furthermore, the determination of the property of the energy storage device 106 may be performed continuously. In other words, the property of the energy storage 106 may be monitored continuously or intermittently/iteratively. As will be appreciated, any appropriate algorithm or program may be used to implement the monitoring/determination of the property of the energy storage device 106.

The parameter of a (e.g. subsequent) charging cycle of the energy storage device 106, which is changed by the control arrangement 110, may comprise a rate of charging of the energy storage device 106. The rate of charging may be considered to be an average rate of charging during an entirety of a single charging cycle. The control arrangement 110 may be configured to change the parameter by limiting a (e.g. maximum) charging current applied to the energy storage device 106 during the (e.g. subsequent) charging cycle thereby reducing the rate of charging. In some embodiments, the control arrangement 110 may be configured to change the parameter by controlling the charging current applied to the energy storage device 106 so as to reduce the average charging current applied to the energy storage device 106 for a given charging cycle.

In some embodiments, the parameter may comprise the maximum amount of energy that can be stored within the energy storage device 106. This maximum amount of energy may be less than the total energy the energy storage device 106 would actually be capable of storing. The control arrangement 110 may be configured to supply the energy storage device 106 with energy up until the point at which it reaches the maximum amount of energy, at which point the charging cycle may stop. The control arrangement may be configured to change the parameter (i.e. the maximum amount of energy that can be stored) by limiting the maximum charging voltage applied to the energy storage device during the (e.g. subsequent) charging cycle, thereby reducing the maximum amount of energy storage that can be stored within the energy storage device. The parameter may thus comprise a maximum amount of energy that can be stored within the energy storage device 106.

The control arrangement 110 may be configured to change the parameter of a (e.g. subsequent) charging cycle based on the property in any suitable manner. For example, the control arrangement 110 may be configured to change the parameter in response to the determination of one or more properties of the energy storage device 106 discussed above. In some embodiments, the control arrangement 110 may be configured to change the parameter in response to the determination of one or more properties of the energy storage device 106 exceeding one or more respective threshold levels as discussed above. In some embodiments, the control arrangement 110 may be configured to change the parameter of the charging cycle when the property of the energy storage device 106 reaches a predetermined threshold level. For example, the control arrangement 110 may be configured to change the parameter when the number of sessions exceeds 2000 sessions, or when expansion of the energy storage device exceeds 10%, or when storage capacity reduces by 10%, or when state of health falls below a ratio of 9:10 ratio. The control arrangement 110 may then utilise the same parameter, following the change, for at least one, e.g. a plurality of further charging cycles. In other words, the control arrangement 110 may use/maintain a particular changed parameter for charging cycles within a particular range of properties, e.g. for charging cycles between the range of 2000-4000 sessions of use, a maximum charging voltage of 4.352V may be used; for charging cycles between the range of 4000-6000 sessions of use a maximum charging voltage of 4.304V may be used; for charging cycles between the range of 6000-8000 sessions of use a maximum charging voltage of 4.256V may be used; and/ or for charging cycles between the range of 8000-10000 sessions of use a maximum charging voltage of 4.192V may be used.

Advantageously, the above-described control arrangement 110 may mitigate/reduce the degradation of the energy storage device 106, e.g. due to swelling. As such, the risk of damage to the aerosol provision device 102 and/or injury to nearby persons tends to be reduced/eliminated.

In some embodiments, the control arrangement 110 may be configured to further change the parameter of the charging cycle when the property of the energy storage device 106 reaches at least one further predetermined threshold level. The at least one further predetermined threshold level may comprise a plurality of further predetermined threshold levels. The control arrangement 110 may be configured to further change the parameter of the charging cycle, at each one of the plurality of further predetermined threshold levels. In other words, the control arrangement 110 may be configured to change the parameter at predetermined intervals/periodic changes of the property. For example, the control arrangement 110 may be configured to change the parameter at every 2000 sessions, or every 3 months, or every 1 % expansion, or every 1 % reduction storage capacity (relative to the original storage capacity when new), or every increment of decreases of 1:100 of the state of health (i.e. 99:100, 98:100, 97:100, etc). As will be appreciated, any suitable thresholds/intervals may be implemented. Following a change of parameter, the control arrangement 110 may be configured to keep the same changed parameter for any subsequent charging cycles until the determined property reaches the next predetermined threshold level.

The changes to the parameter may be continuous or discrete. For example, the (e.g. maximum) charging current may decrease continuously or with discrete jumps at regular intervals. Similarly, the maximum charging voltage may decrease continuously or with discrete jumps at regular intervals. For example, the charging current may reduce for every single charging cycle and/or the maximum charging voltage may reduce for every charging cycle.

In some embodiments, the aerosol provision device 102 may further comprise a display 107. The display 107 may be configured to display an end of life status indicative of whether the energy storage device 106 has reached the end of its life. The display 107 may comprise an LED or LCD display and may output information in the form of text, e.g. "replace battery", and/or one or more symbols. The end of life of an energy storage device 106 may occur when the energy storage device 106 deteriorates to a point where further use of the energy storage device 106 becomes unsafe and/or limited. The deterioration may be a result of repeated use of the energy storage device 106 and/or wear and tear experienced by the energy storage device 106. The energy storage device 106 may expand, e.g. swell, as its number of uses and/or age increases. In this case, the end of life of the energy storage device 106 may occur when the energy storage device 106 swells to a point when further swelling may cause the energy storage device 106 to leak or break apart. In this case, further use may cause injury to nearby persons, e.g. the user, and/or the other components of the aerosol provision device 102. Another example of an end of life of an energy storage device 106 is when the present (i.e. current) maximum (storage) capacity (e.g. the present maximum energy storage capacity/maximum amount of energy that the energy storage device 106 can store and subsequently deliver for consumption) of the energy storage device 106 reduces to below a threshold capacity. This reduction in the maximum capacity may be due to or may cause the breakdown (e.g. chemical or electrical) of the energy storage device 106 when charging or discharging the energy storage device 106. In this case, the risk of short circuits from the energy storage device 106 may also increase.

The end of life may be reached when the one or more characteristics of the energy storage device 106 meets one or more respective pre-determined thresholds. For example, an energy storage device 106 may have reached the end of its life when the number of sessions of use for which the energy storage device has provided power for exceeds a threshold number of sessions, e.g. 7000 sessions, 8000 sessions, 9000 sessions, 10000 sessions, or when the capacity of the energy storage device 106 falls below a threshold capacity (e.g. a percentage of the charge capacity of the energy storage device 106), e.g. below 85%, e.g. below 80% of the charge capacity when the energy storage device 106 is new. Other examples include determining that the energy storage device 106 has reached its end of life when the charge capacity of the energy storage device drops below a threshold value, e.g. approximately 2000 mAh (wherein the original storage capacity is approximately 2500 mAh), or when the number of charging cycles is at least 250, e.g. at least 500, e.g. at least 600, or when the pressure detected by a pressure sensor exceeds a threshold pressure, e.g. 20 kPa, or when the force detected by a force sensor exceeds a threshold force, e.g. 0.7 N. Other examples include wherein the total time charging and or discharging exceeds 800 hours, e.g. 1000 hours, and/or when the discharged power of the energy storage device exceeds 1400 Ah, and/or when the operating time of the device exceeds 1.5 years, e.g. 2 years. As will be appreciated, the various examples set out above may depend on specific parameters of the energy storage device 106, e.g. its size and initial capacity, as well as parameters of the aerosol provision device 102 e.g. the size of the article receiving portion 104 and/or the energy consumed by the heating arrangement 108.

Additionally or alternatively, the display may also be configured display information indicative of the change of the parameter. For example, the display may display the changed parameter. The display 107 may also display the number of sessions per full charge when the parameter has been changed. Additionally, or alternatively, the display 107 may indicate that the property has reached at least one threshold, e.g. the display 107 may indicate that the aerosol provision device 102, specifically the energy storage device 106 thereof, has been used for 2000 sessions. Further indications may be made at subsequent thresholds, e.g. at 4000 sessions, 6000 sessions etc. Additionally or alternatively, the display 107 may also display information indicative of a relative relationship between the property and a predetermined threshold, e.g. the aerosol provision device has reached the threshold of 2000 sessions or the aerosol provision device has 8000 sessions until end of life is reached. In other words, the display 107 may display information relating to the remaining life of the energy storage device 106, e.g. in the form of the number of sessions which it may provide power for and/or the number of charging cycles it may be capable of and/or the number of discharging cycles it may be capable of.

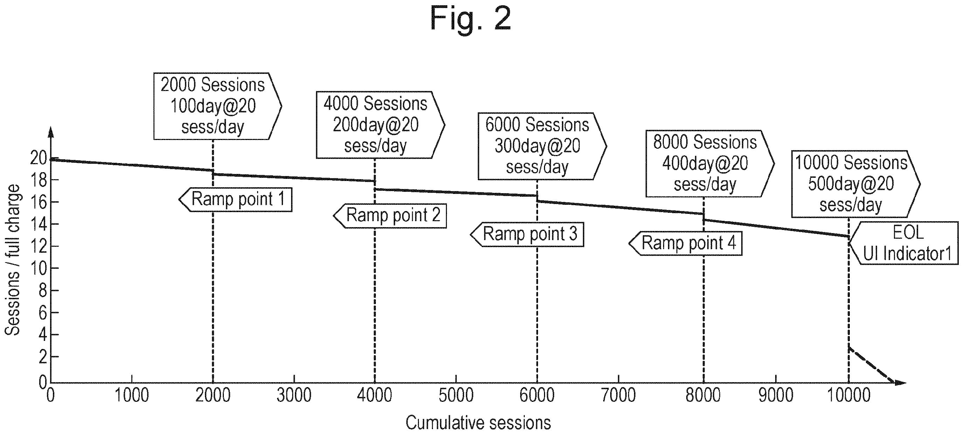

As set out above, in some embodiments, the control arrangement 110 may determine the number of sessions of use for which the energy storage device 106 has provided power and may control a parameter of the charging cycle based on this. Specifically, the parameter of the charging cycle may be changed at a plurality of predetermined thresholds. Figure 2 shows a graph depicting such an embodiment whereby the maximum charging voltage and the maximum charging current is adapted at predetermined thresholds. In this embodiment, the property determined by the control arrangement 110 is the number of cumulative sessions, and the parameter which is changed comprises both the maximum charging voltage and maximum charging current. Of course, in other embodiments, only one of the maximum charging voltage and (e.g. maximum) charging current may be adapted, and indeed an average charging current, or other property of the charging current may be adapted. As shown in Figure 2, the predetermined threshold (e.g. a first predetermined threshold) comprises 2000 sessions. Further predetermined thresholds include 4000 sessions, 6000 sessions, 8000 sessions and 10000 sessions. In other words, the parameter of the charging cycle is changed once every 2000 sessions up to 10000 sessions where the end of life occurs. The change in the parameter results in the number of sessions per full charge to decrease. The decrease in the number of sessions per full charge may tend to allow for the reduction of the swelling or the rate of swelling of the energy storage device 106. The decrease in the charging current, e.g. maximum charging current, may tend to reduce heating of the energy storage device during a charging cycle. This reduction in heating may result in a reduction/mitigation of swelling the energy storage device. Table 1 below shows the variables used in this example. It should be appreciated that the variables set out in the table below are merely exemplary and may vary depending on a number of different factors, for example: the specific energy storage device 106 used (e.g. depending on its storage capacity), the energy consumed for a single session, the temperature in which the aerosol provision device 102 is used etc.

**Table 1**

| Property Threshold (cumulative sessions) | Maximum charging voltage | Maximum charging current | Sessions per full charge with changed parameters |
|---|---|---|---|
| <2000 | 4.40V (100% design capacity) | 3008mA | 20 |
| 2000 | 4.352V (94% design capacity) | 2688mA | 19 |
| 4000 | 4.304V (89% design capacity) | 2688mA | 18 |
| 6000 | 4.256V (79% design capacity) | 2688mA | 16 |
| 8000 | 4.192V (75% design capacity) | 2432mA | 15 |
| 10000 (End of life reached) | 3.840V (34% design capacity) | 192mA | 6 |

As can be seen in Figure 2 and in Table 1, the number sessions per full charge which the energy storage device 160 is able to provide power for reduces in dependence of the parameter, specifically the maximum charging voltage, of the charging cycle. This may advantageously reduce the amount that the energy storage device 106 expands (i.e. swells) during use.

As is apparent from Table 1 above, the parameter of the charging cycle may not be changed every single charging cycle. Instead, as depicted, the parameter may only be changed when the determined property meets a particular threshold level, and may then remain the same until the determined property reaches the next predetermined level. The parameter may remain at the changed state (e.g. the changed value) until that next predetermined level is reached. The control arrangement may nonetheless determine the property at the start of, during, at the end of, or after, each charging cycle. Indeed, in some embodiments, the property may be determined independently of the charging cycle, e.g. where the property is the number of sessions of use.

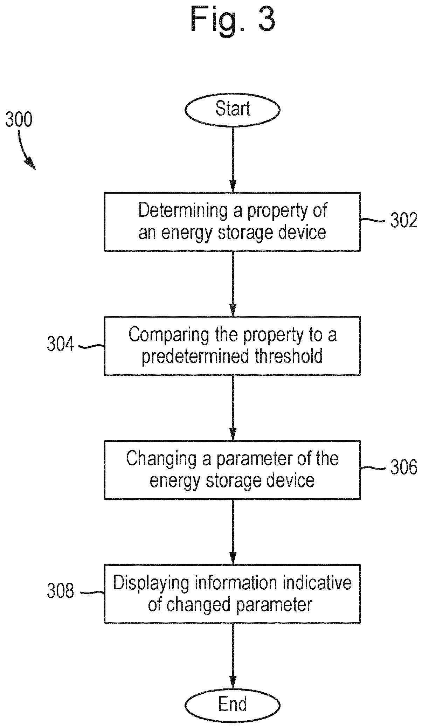

Figure 3 shows a flow chart of a method 300 for operating an aerosol provision device. The method set out below may be performed by any suitable means, e.g. the control arrangement 110 of the aerosol provision device 102 set out above. The method 300 comprises determining 302 a property of an energy storage device of the aerosol provision device. The property may be any of the above described properties, e.g. a property which may be indicative of health, a number of discharges/sessions, a present storage capacity, a state of health, time taken for a (e.g. full) charge, or an expansion amount of the energy storage device. The determination of the property may be performed by a sensor configured to measure the property of the energy storage device. The sensor may be any of the above-described sensors, e.g. a force sensor, a pressure sensor, a capacitance sensor, a timer, or a counter.

In some embodiments, the method 300 may further comprise comparing 304 the determined property with one or more predetermined threshold values. The one or more predetermined threshold values may occur at regular/periodic intervals, e.g. at every 2000 sessions, or at every 1% expansion, or every 1% reduction in storage capacity (relative to the original, e.g. maximum, storage capacity when new), or every increment of 1:100 of the state of health (i.e. 99:100, 98:100, 97:100, etc). As will be appreciated, any suitable predetermined threshold values may be set depending on the specific properties of the energy storage device and/or the aerosol provision device.

The method 300 further comprises changing 306 a parameter of a (e.g. subsequent) charging cycle based on the determined property of the energy storage device. For example, the changing of the parameter may be based on the comparison of the determined property with one or more predetermined threshold values as set out above in step 304. The parameter may be changed to mitigate or reduce swelling of the energy storage device. The parameter may be one or more of: a maximum charging voltage and a (e.g. maximum) charging current or any other suitable parameter, e.g. those set out above in relation the aerosol provision device 102.

The method 300 may further comprise displaying 308 information indicative of an end of life of the energy storage device and/or information indicative of the changed parameter. The information indicative of an end of life of the energy storage device may be an indication of whether the energy storage device has reached the end of its life. The information indicative of the changed parameter may be the changed parameter or a number of sessions available from a single full charge.

At least step 302 of determining a property of the energy storage device, and step 306 of changing a parameter of a (e.g. subsequent) charging cycle based on the determined property, and optionally steps 304, 308, may be repeated across the life of the energy storage device.

Advantageously, at least steps 302, 306 of the above-described method 300 may mitigate/reduce the degradation of the energy storage device, e.g. due to swelling. As such, the risk of injury to nearby persons tends to be reduced/eliminated.

Whilst in the various embodiments of the control arrangement 110 and the method set out above it is described how a maximum charging voltage of the charging cycle may be adapted, it will be appreciated that the charging voltage may be adapted in any other suitable manner. As such, in some embodiments, the parameter comprises the charging voltage applied during the charging cycle.

The steps described above are merely illustrative and the order in which the steps are described in are not essential. Indeed, any of the above described steps may be performed before or after or concurrent with any of other steps. Moreover, any of the steps can be omitted entirely. Any features of the aerosol provision device and system set out in the embodiments above may equally be implemented in the method set out above.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future.

## Claims

1. A control arrangement for use with an aerosol provision device comprising an energy storage device, wherein the control arrangement is configured to:
determine a property of the energy storage device; and
change a parameter of a charging cycle of the energy storage device based on the determined property.

2. The control arrangement of claim 1, wherein the property comprises the number of times that the energy storage device has been discharged.

3. The control arrangement of either claim 1 or claim 2, wherein the property comprises the number of inhalation sessions which the energy storage device has provided power for.

4. The control arrangement of any preceding claim, wherein the property comprises one or more of: a present storage capacity of the energy storage device, a state of health of the energy storage device, a time taken to perform a full charging cycle, and an expansion of an external dimension of the energy storage device.

5. The control arrangement of any preceding claim, wherein the control arrangement is configured to change the parameter by limiting a charging current applied to the energy storage device during the charging cycle.

6. The control arrangement of any preceding claim, wherein the control arrangement is configured to change the parameter by limiting the maximum charging voltage applied to the energy storage device during the charging cycle.

7. The control arrangement of any preceding claim, wherein the control arrangement is configured to change the parameter of the charging cycle when the property of the energy storage device reaches a predetermined threshold level.

8. The control arrangement of claim 7, wherein the predetermined threshold level is at least one of: a number of sessions, an amount of expansion, a storage capacity, and a state of health.

9. The control arrangement of either claim 7 or claim 8, further configured to further change the parameter of the charging cycle when the property of the energy storage device reaches at least one further predetermined threshold level.

10. The control arrangement of claim 9, wherein the at least one further predetermined threshold level comprises a plurality of further predetermined threshold levels, and wherein the control arrangement is configured to further change the parameter of the charging cycle, at each one of the plurality of further predetermined threshold levels.

11. An aerosol provision device comprising:
an energy storage device; and
a control arrangement according to any preceding claim.

12. An aerosol provision system comprising:
an article comprising an aerosol generating medium; and
an aerosol provision device according to claim 11.

13. A method for operating an aerosol provision device, the method comprising:
determining a property of an energy storage device of the aerosol provision device; and
changing a parameter of a charging cycle based on the determined property of the energy storage device.

14. The method of claim 13, further comprising comparing the determined property with a predetermined threshold level.

15. The method of either of claim 13 or claim 14, further comprising displaying information indicative of an end of life of the energy storage device or information indicative of the changed parameter.
